# EUROPÄISCHE PATENTANMELDUNG

(11) **EP 1 860 415 A2**
(43) Veröffentlichungstag der Anmeldung: **28.11.2007**
(21) Anmeldenummer: 07003375.8
(22) Anmeldetag: 17.02.2007
(51) Int. Cl.: G01L 1/22, G01G 3/14

(54) **Biegering-Kraftaufnehmer**

(30) Priorität: 24.05.2006 DE 102006024385
(71) Anmelder: GTM Gassmann Testing and Metrology GmbH, 64404 Bickenbach (DE)
(72) Erfinder: Gassmann, Helmut, 64342 Seeheim-Jugenheim (DE); Schulder, Gerhard, 64673 Zwingenberg (DE)
(74) Vertreter: Katscher Habermann Patentanwälte

(57) **Zusammenfassung**

Bei einem Biegering-Kraftaufnehmer ist ein äußerer Krafteinleitungsring (2) über einen äußeren Ringsteg (5) mit einem Dehnungsmesselemente tragenden Biegering (6) verbunden, der über einen inneren Ringsteg (10) mit einem inneren Krafteinleitungsring (11) verbunden ist. Ein konzentrisch am Umfang des äußeren Krafteinleitungsrings (2) angeordneter Flanschring (16) liegt an einer äußeren kreisringförmigen Stützschulter (20) des äußeren Krafteinleitungsrings (2) an und weist am Umfang verteilt mehrere Schraubenbohrungen (17) auf, die jeweils eine Befestigungsschraube (18) aufnehmen. Die äußere Stützschulter (20) liegt zumindest angenähert in einer die Ringstege (5, 10) enthaltenden Normalebene (14).

## Beschreibung

Die Erfindung betrifft einen Biegering-Kraftaufnehmer mit einem einstückig ausgeführten, rotationssymmetrischen Aufnehmerkörper, wobei ein äußerer Krafteinleitungsring über einen äußeren Ringsteg mit einem Dehnungsmesselemente tragenden Biegering verbunden ist, der über einen inneren Ringsteg mit einem inneren Krafteinleitungsring verbunden ist, wobei der äußere Ringsteg und der innere Ringsteg mindestens angenähert in einer gemeinsamen Normalebene zur Mittelachse des Aufnehmerkörpers angeordnet sind.

Derartige Biegering-Kraftaufnehmer sind in zahlreichen Ausführungsformen bekannte. Die zwischen dem inneren Krafteinleitungsring und dem äußeren Krafteinleitungsring übertragene, zu messende Axialkraft wird über den äußeren Ringsteg und den inneren Ringsteg in den Biegering eingeleitet und verursacht eine Verformung des Biegerings, die zu einer elektrischen Widerstandsänderung der üblicherweise an den Stirnseiten des Biegerings angeordneten Dehnungsmesselemente, beispielsweise DehnmessSpiralen, führen. Diese Widerstandsänderungen werden in einer elektrischen Brückenschaltung in kraftproportionale Messsignale umgesetzt und zur Kraftmessung ausgewertet.

Der äußere Krafteinleitungsring muss an einer den Biegering-Kraftaufnehmer tragenden Stützfläche festgespannt werden. Hierzu ist es bekannt, im äußeren Krafteinleitungsring einen Kranz von Schraubenbohrungen vorzusehen, die jeweils eine in die Stützfläche eingeschraubte Befestigungsschraube aufnehmen.

Der Teilkreisdurchmesser, die Anzahl und der Bohrungsdurchmesser der Schraubenbohrungen müssen an die in der Stützfläche vorgesehenen Gewindebohrungen angepasst werden. Dies macht es erforderlich, unterschiedliche Bohrungsanordnungen an den äußeren Krafteinleitungsringen zur Anpassung an unterschiedliche Bohrungsanordnungen in der zur Aufnahme vorgesehenen Stützfläche bereitzustellen. Hierdurch wird der Fertigungsaufwand erhöht und die Lagerhaltung erschwert.

Die Notwendigkeit, im äußeren Krafteinleitungsring die Schraubenbohrungen für die Befestigungsschrauben vorzusehen, macht es erforderlich, den Aufnehmerkörper mit verhältnismäßig großem Durchmesser auszuführen. Dies führt zu einem hohen Materialbedarf, der sich insbesondere dadurch kostensteigernd auswirkt, dass für den Aufnehmerkörpers des Biegering-Kraftaufnehmers sehr hochwertiges Material verwendet werden muss. Wegen der erforderlichen Abmessungen sind die Aufnehmerkörper verhältnismäßig schwer.

Aufgabe der Erfindung ist es daher, einen Biegering-Kraftaufnehmer der eingangs genannten Gattung so auszugestalten, dass mit einfachen Mitteln und geringen Kosten eine einfache Anpassung an unterschiedlich ausgeführte Bohrungen der aufnehmenden Stützfläche ermöglicht wird.

Diese Aufgabe wird erfindungsgemäß dadurch gelöst, dass ein konzentrisch am Umfang des äußeren Krafteinleitungsrings angeordneter Flanschring an einer äußeren kreisringförmigen Stützschulter des äußeren Krafteinleitungsrings anliegt und am Umfang verteilt mehrere Schraubenbohrungen aufweist, die jeweils eine Befestigungsschraube aufnehmen.

Bei der Verwendung eines solchen, konstruktiv und fertigungstechnisch einfachen Flanschrings weist der äußere Krafteinleitungsring des Aufnehmerkörpers keine Schraubenbohrungen auf. Es ist daher nicht erforderlich, zur Anpassung an unterschiedliche Teilkreise von Befestigungsbohrungen der Stützfläche unterschiedliche Anordnungen von Schraubenbohrungen am Aufnehmerkörper selbst vorzusehen. Die Anpassung an die Gegebenheiten der den Biegering-Kraftaufnehmer tragenden Stützfläche erfolgt ausschließlich durch unterschiedliche Gestaltung des Flanschrings, während der Aufnehmerkörper des Biegering-Kraftaufnehmers unverändert bleibt. Daher ist es möglich, gleiche Aufnehmerkörper für unterschiedliche Einsatzfälle bereitzustellen und hierfür nur unterschiedliche Flanschringe vorzusehen. Da die Flanschringe einfache Kreisringe mit Schraubenbohrungen sind, ist der fertigungstechnische Aufwand zur Anpassung an unterschiedliche Gegebenheiten verhältnismäßig gering. Hinzu kommt noch, dass die Anforderungen hinsichtlich der Materialeigenschaften für die Flanschringe gering sind, so dass diese aus einfachem Material, beispielsweise Baustahl, hergestellt werden können, während nur für den Aufnehmerkörper hochwertiges und damit teures Material verwendet werden muss, beispielsweise höherlegierter Stahl. Der Materialbedarf für den Aufnehmerkörper ist verhältnismäßig gering, weil der äußere Krafteinleitungsring schmal ausgeführt werden kann, da der Kranz von Schraubenbohrungen außerhalb des äußeren Krafteinleitungsrings liegt. Dadurch kann der Aufnehmerkörper mit verhältnismäßig geringem Außendurchmesser ausgeführt werden; sein Gewicht ist gering.

Die Einleitung der von den Befestigungsschrauben ausgeübten Spannkraft über die äußere kreisringförmige Stützschulter des äußeren Krafteinleitungsrings• führt dazu, dass störende Einflüsse auf die zu messende Kraft weitestgehend vermieden werden. Insbesondere lässt sich die Stelle der Einleitung der Spannkraft hierbei optimal wählen. Vorzugsweise liegt die äußere Stützschulter zumindest angenähert in der die Ringstege enthaltenden Normalebene.

In weiterer Ausgestaltung des Erfindungsgedankens ist als besonders vorteilhafte Maßnahme vorgesehen, dass der innere Krafteinleitungsring an seiner zentralen Bohrung eine innere kreisringförmige Stützschulter aufweist, an der ein zentraler Krafteinleitungskörper anliegt.

Durch die Verwendung eines solchen gesonderten, vom Aufnehmerkörper unabhängigen zentralen Krafteinleitungskörpers wird erreicht, dass auch am inneren Krafteinleitungsring keine besonderen konstruktiven Maßnahmen zur Anpassung an die Gegebenheiten des jeweiligen Einsatzfalles erforderlich sind. Vielmehr kann auch der innere Krafteinleitungsring für alle Einsatzfälle gleich gestaltet werden, nämlich mit der inneren kreisringförmigen Stützschulter. Alle Maßnahmen zur konstruktiven Anpassung an den jeweiligen Einsatzfall werden an dem gesonderten zentralen Krafteinleitungskörper vorgenommen, der beispielsweise eine zentrale Gewindebohrung oder einen Kranz von Schraubenbohrungen aufweist.

Vorzugsweise liegt die innere Stützschulter des inneren Krafteinleitungsrings zumindest angenähert in der die Ringstege enthaltenden Normalebene. Dadurch ist unabhängig von der Ausführung des zentralen Krafteinleitungskörpers eine für den Messvorgang optimale Krafteinleitung in den Aufnehmerkörper gewährleistet.

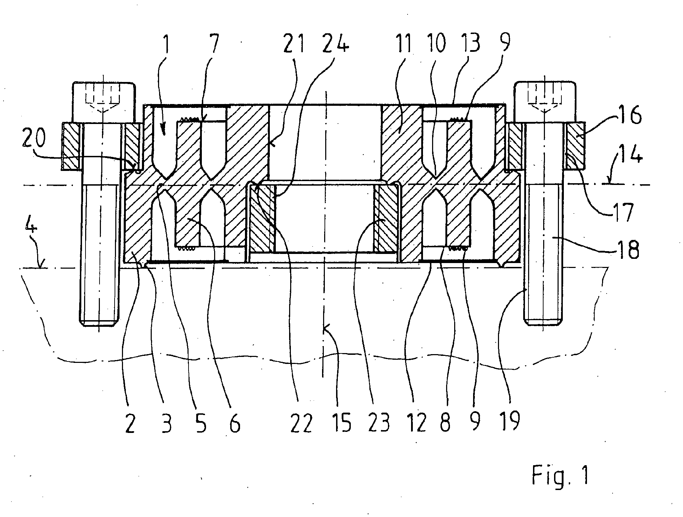

Die Erfindung wird nachfolgend an einem Ausführungsbeispiel näher erläutert, das in der Zeichnung dargestellt ist.

Die einzige Figur der Zeichnung zeigt einen Biegering-Kraftaufnehmer im Axialschnitt. Ein einstückig ausgeführter, rotationssymmetrischer Aufnehmerkörper 1 weist einen äußeren Krafteinleitungsring 2 auf, der mit einem an seiner Stirnfläche vorspringenden Ringwulst 3 gegen eine Stützfläche 4 gespannt ist.

Der äußere Krafteinleitungsring 2 ist über einen äußeren Ringsteg 5 mit einem konzentrisch innerhalb des äußeren Krafteinleitungsrings 2 angeordneten Biegering 6 verbunden. Der im Wesentlichen zylindrische Biegering 6 trägt an seinen beiden Stirnflächen 7 und 8 jeweils eine Dehnmessspirale 9. Die Dehnmessspirale 9, deren elektrischer Widerstand sich bei einer Verformung des Biegerings 6 verändert, sind zu einer (nicht dargestellten) elektrischen Brückenschaltung geschaltet.

An seiner Innenseite ist der Biegering 6 über einen inneren Ringsteg 10 mit einem inneren Krafteinleitungsring 11 verbunden. Stirnseitige Membranen 12 und 13 verschließen den den Ringsteg 6 aufnehmenden Raum zwischen dem äußeren Krafteinleitungsring 2 und dem inneren Krafteinleitungsring 11. Die Ringstege 5 und 10 sind in einer gemeinsamen Normalebene 14 zur Mittelachse 15 des Aufnehmerkörpers 1 angeordnet.

Am Umfang des äußeren Krafteinleitungsrings 2 ist konzentrisch ein Flanschring 16 angeordnet, der an seinem Umfang verteilt mehrere Schraubenbohrungen 17 aufweist. Jede Schraubenbohrung 17 nimmt eine Befestigungsschraube 18 auf, die in eine Gewindebohrung 19 der Stützfläche 4 eingeschraubt ist.

Der Flanschring 16 liegt an einer äußeren kreisringförmigen Stützschulter 20 des äußeren Krafteinleitungsrings 2 an. Die Stützschulter 20 kann eben ausgeführt sein oder - wie in der Zeichnung dargestellt - im Querschnitt konvex gewölbt. Die Stützschulter 20 wird durch einen kreisringförmigen Absatz oder eine Stufe am äußeren Umfang des äußeren Krafteinleitungsrings 2 gebildet.

Mittels der Befestigungsschrauben 18 wird der äußere Krafteinleitungsring 2 gegen die Stützfläche 4 gespannt. Die äußere Stützschulter 20 liegt angenähert in der die Ringstege 5 und 10 enthaltenden Normalebene 14. Bei dem in der Zeichnung dargestellten Ausführungsbeispiel liegt die Stützschulter 20 um ein geringes Maß oberhalb der Normalebene 14, wobei dieses Maß beispielsweise etwa zehn Prozent der Höhe des Aufnehmerkörpers 1 beträgt. Der zwischen der Stützschulter 20 und der Stützfläche 4 liegende Abschnitt des äußeren Krafteinleitungsrings 2 hat beispielsweise eine Höhe von sechzig Prozent der Gesamthöhe des Aufnehmerkörpers 1.

Der innere Krafteinleitungsring 11 weist an seiner zentralen Bohrung 21 eine innere kreisringförmige Stützschulter 22 auf, die bei dem dargestellten Ausführungsbeispiel in der die Ringstege 5 und 10 enthaltenden Normalebene 14 liegt. Die innere Stützschulter 22 ist der Stützfläche 4 zugekehrt und - wie in der Zeichnung dargestellt - beispielsweise als im Querschnitt konvex gewölbte Ringfläche ausgeführt.

An der inneren Stützschulter 20 liegt ein zentraler Krafteinleitungskörper 23 an, der bei dem dargestellten Ausführungsbeispiel als Ring mit einer zentralen Gewindebohrung 24 ausgeführt ist. Die Gewindebohrung 24 dient zur Aufnahme einer (nicht dargestellten) Zugstange, durch die die zu messende axiale Zugkraft (in der Zeichnung nach oben gerichtet) in den Aufnehmerkörper 4 eingeleitet wird. Diese Zugkraft wird über den äußeren Krafteinleitungsring 2, den Flanschring 16 und die Befestigungsschrauben 18 in die Stützfläche 4 eingeleitet. Die dabei eintretende Verformung des Biegerings 6 führt zu Längenänderungen der Dehnmessspiralen 9. Die dadurch bewirkten elektrische Widerstandsänderung liefert in der elektrischen Brückenschaltung ein der eingeleiteten Zugkraft proportionales Messsignal.

An Stelle der dargestellten Ausführung des zentralen Krafteinleitungskörpers 23 mit einer Gewindebohrung 24 kann auch vorgesehen werden, den Krafteinleitungskörper mit einem Kranz von Schraubenbohrungen zu versehen, wenn die anzuschließende Zugstange oder ein ähnliches Bauteil zum Anschluss mittels Verbindungsschrauben vorgesehen ist.

Die Anpassung des Biegering-Kraftaufnehmers an die konstruktiven Gegebenheiten des jeweiligen Einsatzbereichs erfolgt durch Auswechseln des Flanschrings 16 und/oder des zentralen Krafteinleitungskörpers 23. Der Aufnehmerkörper 1 bleibt hierbei unverändert.

## Patentansprüche

1. Biegering-Kraftaufnehmer mit einem einstückig ausgeführten, rotationssymmetrischen Aufnehmerkörper, wobei ein äußerer Krafteinleitungsring über einen äußeren Ringsteg mit einem Dehnungsmesselemente tragenden Biegering verbunden ist, der über einen inneren Ringsteg mit einem inneren Krafteinleitungsring verbunden ist, wobei der äußere Ringsteg und der innere Ringsteg mindestens angenähert in einer gemeinsamen Normalebene zur Mittelachse des Aufnehmerkörpers angeordnet sind, **dadurch gekennzeichnet, dass** ein konzentrisch am Umfang des äußeren Krafteinleitungsrings (2) angeordneter Flanschring (16) an eine äußeren kreisringförmigen Stützschulter (20) des äußeren Krafteinleitungsrings (2) anliegt und am Umfang verteilt mehrere Schraubenbohrungen (17) aufweist, die jeweils eine Befestigungsschraube (18) aufnehmen.

2. Biegering-Kraftaufnehmer nach Anspruch 1, **dadurch gekennzeichnet, dass** die äußere Stützschulter (20) zumindest angenähert in der die Ringstege (5, 10) enthaltenden Normalebene (14) liegt.

3. Biegering-Kraftaufnehmer nach Anspruch 1, **dadurch gekennzeichnet, dass** der innere Krafteinleitungsring (11) an seiner zentralen Bohrung (21) eine innere kreisringförmige Stützschulter (22) aufweist, an der ein zentraler Krafteinleitungskörper (23) anliegt.

4. Biegering-Kraftaufnehmer nach Anspruch 3, **dadurch gekennzeichnet, dass** die innere Stützschulter (22) zumindest angenähert in der die Ringstege (5, 10) enthaltenden Normalebene (14) liegt.

5. Biegering-Kraftaufnehmer nach Anspruch 3, **dadurch gekennzeichnet, dass** der zentrale Krafteinleitungskörper (23) eine zentrale Gewindebohrung (24) aufweist.

6. Biegering-Kraftaufnehmer nach Anspruch 3, **dadurch gekennzeichnet, dass** der zentrale Krafteinleitungskörper einen Kranz von Schraubenbohrungen aufweist.
